# EUROPEAN PATENT APPLICATION

(11) **EP 4 708 545 A1**
(43) Date of publication of application: **11.03.2026**
(21) Application number: 25197014.1
(22) Date of filing: 20.08.2025
(51) Int. Cl.: H01M 50/528, H01M 50/533, H01M 50/536, H01M 50/538, H01M 50/54

(54) **SECONDARY BATTERY**

(30) Priority: 23.08.2024 KR 20240113646
(71) Applicant: SK On Co., Ltd., Seoul 03161 (KR)
(72) Inventor: KWAK, Seung Ho, 34124 Daejeon (KR)
(74) Representative: Stolmár & Partner Patentanwälte PartG mbB

(57) **Abstract**

A secondary battery according to embodiments of the present disclosure includes a first electrode assembly including a first electrode tab which includes a plurality of 1-1 uncoated parts, each bent in a first direction, and a first auxiliary electrode tab protruding from the same side as the first electrode tab, a second electrode assembly which is stacked on the first electrode assembly in the first direction and includes a second electrode tab including a plurality of 2-1 uncoated parts, each bent in a direction opposite to the first direction, and a second auxiliary electrode tab protruding from the same side as the second electrode tab, and a current collection plate that entirely covers the first electrode tab and the second electrode tab, and is electrically connected to the first electrode tab and the second electrode tab, wherein the first electrode tab is bent in the first direction to contact the second auxiliary electrode tab, and the second electrode tab is bent in the direction opposite to the first direction to contact the first auxiliary electrode tab.

## Description

### [BACKGROUND OF THE INVENTION]

### 1. Field of the Invention

The disclosure of the present application relates to a secondary battery.

### 2. Description of the Related Art

Secondary batteries are batteries that can be repeatedly charged and discharged. With the development of information and communication and display industries, the secondary batteries have been widely applied as power sources for portable electronic communication devices, such as camcorders, mobile phones, and laptop PCs. In addition, battery packs including the secondary batteries have recently been developed and applied as power sources for eco-friendly vehicles, such as hybrid cars.

The secondary battery may include: an electrode assembly including a cathode, an anode, and a separator, and an electrolyte in which the electrode assembly is impregnated. The secondary battery may further include an outer case that accommodates the electrode assembly and the electrolyte.

For example, the electrode assembly may be manufactured in a jelly roll form by winding or folding the separator, and may also be manufactured in a stack form by stacking the separator.

A current collection plate configured to transmit current may be disposed between an uncoated part (e.g., an electrode tab) of an electrode and a terminal. For example, the current collection plate may be bent in a double structure and bonded to the uncoated part, or a flat-shaped current collection plate may be bonded to the folded surface of the uncoated part while the uncoated part is folded. Since the volume occupied by the flat current collection plate is relatively small, the energy density per unit volume of the secondary battery may be increased.

Recently, a method of welding multiple uncoated parts and current collection plates simultaneously has been developed. However, at least some of the multiple uncoated parts may protrude from the current collection plate, which may reduce processability.

### [SUMMARY OF THE INVENTION]

According to an aspect of the present disclosure, a secondary battery having improved operational reliability and processability may be provided.

A secondary battery according to exemplary embodiments of the present disclosure includes a first electrode assembly including a first electrode tab including a plurality of 1-1 uncoated parts, each bent in a first direction, and a first auxiliary electrode tab protruding from the same side as the first electrode tab a second electrode assembly stacked on the first electrode assembly in the first direction and including a second electrode tab including a plurality of 2-1 uncoated parts, each bent in a direction opposite to the first direction, and a second auxiliary electrode tab protruding from the same side as the second electrode tab and a current collection plate that entirely covers the first electrode tab and the second electrode tab, and is electrically connected to the first electrode tab and the second electrode tab. The first electrode tab is bent in the first direction to contact the second auxiliary electrode tab, and the second electrode tab is bent in the direction opposite to the first direction to contact the first auxiliary electrode tab.

In some embodiments, the first electrode tab and the second electrode tab may not be disposed on the same line in the first direction, and the first auxiliary electrode tab and the second auxiliary electrode tab may not be disposed on the same line in the first direction.

In some embodiments, the first electrode tab and the second auxiliary electrode tab may be disposed on the same line in the first direction, and the second electrode tab and the first auxiliary electrode tab may be disposed on the same line in the first direction.

In some embodiments, the first electrode tab may be supported by an end portion of the second auxiliary electrode tab, and the second electrode tab may be supported by an end portion of the first auxiliary electrode tab.

In some embodiments, the first auxiliary electrode tab may include a plurality of unbent 1-2 uncoated parts, and the second auxiliary electrode tab may include a plurality of unbent 2-2 uncoated parts.

In some embodiments, the first electrode tab and the second electrode tab may face each other in a first diagonal direction inclined relative to the first direction.

In some embodiments, a length of each of the plurality of 1-1 uncoated parts and the plurality of 2-1 uncoated parts in the first direction may be less than or equal to 0.5 times a width of the current collection plate.

In some embodiments, a ratio of the length of the second electrode tab in the first direction to the length of the first electrode tab in the first direction may be 0.5 to 1.5.

In some embodiments, the number of the plurality of 1-1 uncoated parts included in the first electrode tab may be 5 to 100, and the number of the plurality of 2-1 uncoated parts included in the second electrode tab may be 5 to 100.

In some embodiments, a width direction of the first electrode assembly and the second electrode assembly may be the first direction, a longitudinal direction of the first electrode assembly and the second electrode assembly may be a second direction, a height direction of the first electrode assembly and the second electrode assembly may be a third direction, and the first electrode tab and the first auxiliary electrode tab may be spaced apart from each other in the third direction, and the second electrode tab and the second auxiliary electrode tab may be spaced apart from each other in the third direction.

In some embodiments, a width direction of the first electrode assembly and the second electrode assembly may be the first direction, a longitudinal direction of the first electrode assembly and the second electrode assembly may be the second direction, and a height direction of the first electrode assembly and the second electrode assembly may be the third direction, and the shortest distance between the first electrode tab and the second electrode tab may be less than or equal to a length of the first electrode tab in the third direction, and the shortest distance may be less than or equal to a length of the second electrode tab in the third direction.

In some embodiments, the first electrode tab may protrude from one side of the first electrode assembly, and the second electrode tab may protrude from one side of the second electrode assembly, the first electrode assembly may further include a third electrode tab protruding from the other side of the first electrode assembly and including a plurality of 3-1 uncoated parts, each bent in the first direction, and the second electrode assembly may further include a fourth electrode tab protruding from the other side of the second electrode assembly and including a plurality of 4-1 uncoated parts, each bent in the direction opposite to the first direction.

In some embodiments, the first electrode assembly may further include a third auxiliary electrode tab protruding from the same side as the third electrode tab and including a plurality of 3-2 uncoated parts, and the second electrode assembly may further include a fourth auxiliary electrode tab protruding from the same side as the fourth electrode tab and including a plurality of 4-2 uncoated parts.

In some embodiments, the first electrode tab and the third auxiliary electrode tab may be disposed on the same line in a second direction perpendicular to the first direction, the third electrode tab and the first auxiliary electrode tab may be disposed on the same line in the second direction, the second electrode tab and the fourth auxiliary electrode tab may be disposed on the same line in the second direction, and the fourth electrode tab and the second auxiliary electrode tab may be disposed on the same line in the second direction.

In some embodiments, the first electrode tab and the second electrode tab may face each other in a first diagonal direction inclined relative to the first direction, and the second electrode tab and the fourth electrode tab may face each other in a second diagonal direction inclined in a direction opposite to the first diagonal direction with respect to the first direction.

In some embodiments, the first electrode tab and the third electrode tab may be disposed on the same line in a second direction perpendicular to the first direction, the first auxiliary electrode tab and the third auxiliary electrode tab may be disposed on the same line in the second direction, the second electrode tab and the fourth electrode tab may be disposed on the same line in the second direction, and the second auxiliary electrode tab and the fourth auxiliary electrode tab may be disposed on the same line in the second direction.

In some embodiments, the current collection plate may include welded parts formed by welding the first electrode tab and the second electrode tab to the current collection plate, respectively.

In some embodiments, the welded parts may be disposed on a surface of the current collection plate that is adjacent to the first electrode assembly and the second electrode assembly.

In some embodiments, the secondary battery may further include a case in which the first electrode assembly and the second electrode assembly are accommodated a cap plate configured to seal the case and an electrode terminal coupled to the cap plate and electrically connected to the electrode tabs.

According to an embodiment of the present disclosure, the manufacturing process may be simplified.

According to an embodiment of the present disclosure, the processability and structural stability of the secondary battery may be improved.

According to an embodiment of the present disclosure, heat generation and damage in the secondary battery may be suppressed.

The secondary battery of the present disclosure may be widely applied in green technology fields, such as electric vehicles, battery charging stations, as well as solar power generation, wind power generation, and the like, which use the batteries. In addition, the secondary battery of the present disclosure may be used in eco-friendly electric vehicles, hybrid vehicles, and the like, which are aimed at mitigating climate change by reducing air pollution and greenhouse gas emissions.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic exploded perspective view of a secondary battery according to exemplary embodiments;
FIG. 2 is a reference view for describing a first diagonal direction;
FIG. 3 is a schematic exploded perspective view of an electrode assembly according to exemplary embodiments;
FIG. 4 is a schematic exploded perspective view of a secondary battery according to exemplary embodiments;
FIG. 5 is a reference view for describing a second diagonal direction;
FIG. 6 is a schematic perspective view for describing a first electrode assembly and a second electrode assembly according to exemplary embodiments;
FIG. 7 is a schematic perspective view showing an electrode assembly and a current collection plate according to exemplary embodiments;
FIG. 8 is a schematic cross-sectional view taken along line A-A' of FIG. 7; and
FIG. 9 is a schematic cross-sectional view taken along line B-B' of FIG. 7.

### [DETAILED DESCRIPTION OF THE INVENTION]

Embodiments of the present disclosure provide a secondary battery.

As used herein, the terms "top surface," "side," "one surface," "the other surface," "one side," "the other side," and the like are used in a relative sense to distinguish the positions of components, and do not specify absolute positions.

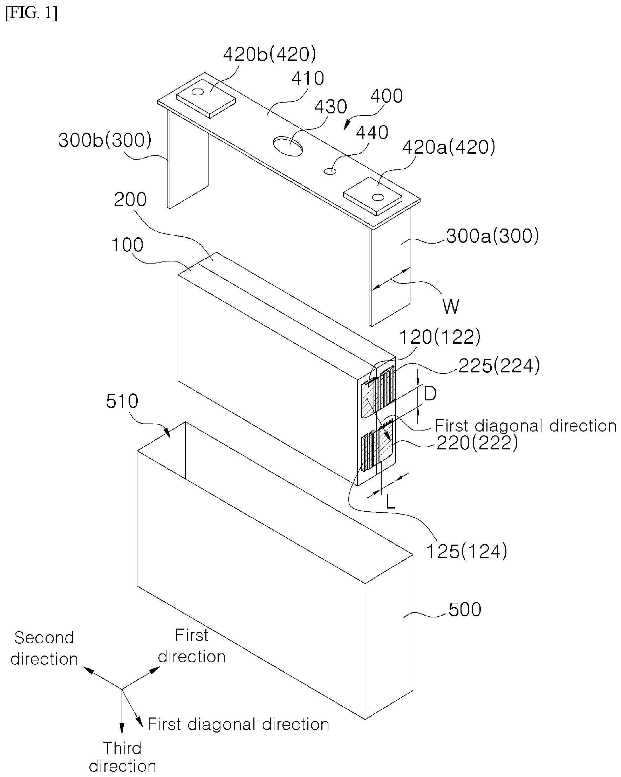

As used herein, the terms "first direction" may refer to a direction in which a first electrode tab 120 is bent. The first direction may refer to a direction in which a first electrode assembly 100 and a second electrode assembly 200 are stacked. The first direction may refer to a width direction of the first electrode assembly 100 and/or the second electrode assembly 200. The first direction may refer to the first direction in FIG. 1, and FIGS. 3 to 7.

As used herein, the term "second direction" may refer to a longitudinal direction of the first electrode assembly 100 and/or the second electrode assembly 200. The second direction may refer to a direction from one side of the first electrode assembly 100 and/or the second electrode assembly 200 to the other side. The second direction may refer to the second direction in FIG. 1, and FIGS. 3 to 7.

As used herein, the term "third direction" may refer to a height direction of the first electrode assembly 100 and/or the second electrode assembly 200. The third direction may refer to the third direction in FIG. 1, and FIGS. 3 to 7. The third direction may refer to a direction perpendicular to the first direction and the second direction.

FIG. 1 is an exploded perspective view of a secondary battery according to exemplary embodiments.

Referring to FIG. 1, the secondary battery may include the first electrode assembly 100 and the second electrode assembly 200.

The first electrode assembly 100 and the second electrode assembly 200 may be disposed in the first direction. For example, the second electrode assembly 200 may be stacked on the first electrode assembly 100 in the first direction. In one embodiment, the second electrode assembly 200 may be directly disposed on the first electrode assembly 100.

For example, the first electrode assembly 100 and the second electrode assembly 200 may be joined, fixed or connected to provide a single battery configuration unit.

In exemplary embodiments, the first electrode assembly 100 may include the first electrode tab 120 including a plurality of 1-1 uncoated parts 122, each bent in the first direction. The second electrode assembly 200 may include a second electrode tab 220 including a plurality of 2-1 uncoated parts 222, each bent in a direction opposite to the first direction.

In exemplary embodiments, the first electrode assembly 100 may include a first auxiliary electrode tab 125 protruding from the same surface as the first electrode tab 120 and including a plurality of unbent 1-2 uncoated parts 124. The second electrode assembly 200 may include second auxiliary electrode tab 225 protruding from the same surface as the second electrode tab 220 and including a plurality of unbent 2-2 uncoated parts 224.

In exemplary embodiments, the first electrode tab 120 may be bent in the first direction to contact a second auxiliary electrode tab 225, and the second electrode tab 220 may be bent in the direction opposite to the first direction to contact the first auxiliary electrode tab 125. Accordingly, the welding stability of the electrode tabs 120 and 220 and the current collection plate 300 may be improved, and the structural stability of the secondary battery may be further enhanced.

In some embodiments, the first electrode tab 120 may be supported by an end portion of the second auxiliary electrode tab 225, and the second electrode tab 220 may be supported by an end portion of the first auxiliary electrode tab 125. For example, the first electrode tab 120 may be bent in the first direction and extend toward the second electrode assembly 200, and the extended portion may be supported by the second auxiliary electrode tab 225. For example, the second electrode tab 220 may be bent in the direction opposite to the first direction and extend toward the first electrode assembly 100, and the extended portion may be supported by the first auxiliary electrode tab 125. Accordingly, the processability of the secondary battery may be further improved and the stability may be further enhanced.

In some embodiments, the first electrode tab 120 and the first auxiliary electrode tab 125 may be spaced apart from each other in the third direction. The second electrode tab 220 and the second auxiliary electrode tab 225 may be spaced apart from each other in the third direction.

For example, each of the first electrode assembly 100 and the second electrode assembly 200 may include a plurality of repeatedly stacked electrodes and a separator interposed between the electrodes.

Each of the plurality of electrodes may include an uncoated part. For example, the electrodes included in the first electrode assembly 100 may respectively include the 1-1 uncoated part 122 and the 1-2 uncoated part 124, and the electrodes included in the second electrode assembly 200 may respectively include the 2-1 uncoated part 222 and the 2-2 uncoated part 224.

For example, the first electrode tab 120 may include a set of the plurality of 1-1 uncoated parts 122 and a set of a plurality of 1-2 uncoated parts 124, and the second electrode tab 220 may include a set of the plurality of 2-1 uncoated parts 222 and a set of a plurality of 2-2 uncoated parts 224.

In one embodiment, the plurality of 1-1 uncoated parts 122 may not be individually bonded or pressed together. For example, the plurality of 1-2 uncoated parts 124 may not be individually bonded or pressed together.

In one embodiment, the plurality of 2-1 uncoated parts 222 may not be individually bonded or pressed together. For example, the plurality of 2-2 uncoated parts 224 may not be individually bonded or pressed together.

In some embodiments, the number of the plurality of 1-1 uncoated parts 122 included in the first electrode tab 120 may be 5 to 100, or 10 to 50. The number of the plurality of 2-1 uncoated parts 222 included in the second electrode tab 220 may be 5 to 100, or 10 to 50. Within the above range, the output properties of the secondary battery may be enhanced while improving space utilization.

In some embodiments, the number of the plurality of 1-2 uncoated parts 124 included in the first auxiliary electrode tab 125 may be 5 to 100, or 10 to 50. The number of the plurality of 2-2 uncoated parts 224 included in the second auxiliary electrode tab 225 may be 5 to 100, or 10 to 50. Within the above range, the bent first electrode tab 120 may be sufficiently supported by the second auxiliary electrode tab 225, and the bent second electrode tab 220 may be sufficiently supported by the first auxiliary electrode tab 125. Accordingly, welding stability may be further improved, and the structural stability of the secondary battery may be further enhanced.

In exemplary embodiments, the first electrode tab 120 may be bent in the first direction, and the second electrode tab 220 may be bent in the direction opposite to the first direction. For example, the plurality of 1-1 uncoated parts 122 may be bent in a first direction, and the plurality of 2-1 uncoated parts 222 may be bent in a direction opposite to the first direction. The first electrode assembly 100 and the second electrode assembly 200 may be stacked so that the bent first electrode tab 120 and the second electrode tab 220 do not protrude beyond the electrode assembly. Accordingly, an additional bending process for the protruding portion may be unnecessary, and the thickness of the secondary battery may be reduced, thereby improving the processability and structural stability.

As used herein, the term "direction opposite to the first direction" may indicate a direction in which the 2-1 uncoated parts and/or the second electrode tab 220 are bent.

In exemplary embodiments, the first electrode tab 120 and the second electrode tab 220 may not be disposed on the same line in the first direction. Accordingly, heat generation and damage in the secondary battery due to contact between the first electrode tab 120 and the second electrode tab 220 may be prevented while improving the processability and reliability.

In the present disclosure, "A and B are not disposed on the same line in a predetermined direction" may refer to that A and B are not located together on an imaginary straight line extending in a predetermined direction.

In the present disclosure, "A and B are disposed on the same line in a predetermined direction" may refer to that A and B are located together on at least one straight line extending in a predetermined direction.

In exemplary embodiments, the first auxiliary electrode tab 125 and the second auxiliary electrode tab 225 may not be disposed on the same line in the first direction.

For example, the first electrode tab 120 and the second auxiliary electrode tab 225 may be disposed on the same line in the first direction, and the second electrode tab 220 and the first auxiliary electrode tab 125 may also be disposed on the same line in the first direction. Accordingly, the first electrode tab 120, which is bent in the first direction, and the second electrode tab 220, which is bent in the direction opposite to the first direction, may be in contact with and supported by the second auxiliary electrode tab 225 and the first auxiliary electrode tab 125, respectively.

In some embodiments, the first electrode tab 120 and the second electrode tab 220 may face each other in a first diagonal direction inclined relative to the first direction.

For example, the first diagonal direction may be a direction from a central portion of a 1-1 uncoated part, which is positioned farthest from the second electrode assembly 200 among the 1-1 uncoated parts 122, to a central portion of a 2-1 uncoated part, which is positioned farthest from the first electrode assembly 100 among the 2-1 uncoated parts 222. The central portion of the 1-1 uncoated part may represent a center point when the 1-1 uncoated part is in an unbent state, and the central portion of the 2-1 uncoated part may represent a center point when the 2-1 uncoated part is in an unbent state.

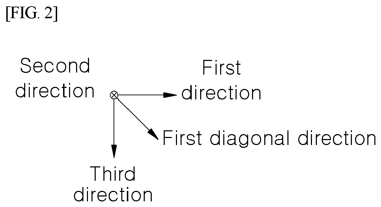

FIG. 2 is a reference view for describing the first diagonal direction.

Referring to FIG. 2, the first diagonal direction may indicate a direction extending between the first direction and the third direction on a plane formed by the first direction and the third direction.

For example, the first diagonal direction may be inclined by 1° to 89°, 10° to 80°, or 30° to 60° relative to the first direction.

Referring to FIG. 1 again, in exemplary embodiments, the secondary battery may include a current collection plate 300 that entirely covers the first electrode tab 120 and the second electrode tab 220, and is electrically connected to the first electrode tab 120 and the second electrode tab 220.

In one embodiment, the current collection plate 300 may include a plate-shaped structure. Accordingly, the volume of the current collection plate 300 may be reduced, thereby improving the capacity and energy density of the secondary battery, and the contact area between the current collection plate 300 and the electrode tabs 120 and 220 may be increased, thereby reducing the resistance of the secondary battery.

In one embodiment, a conductive metal plate may be provided as the current collection plate 300.

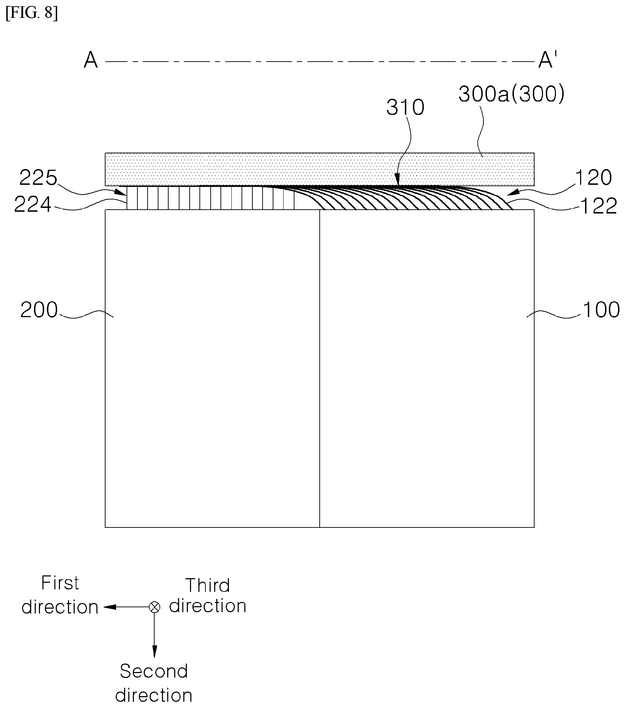

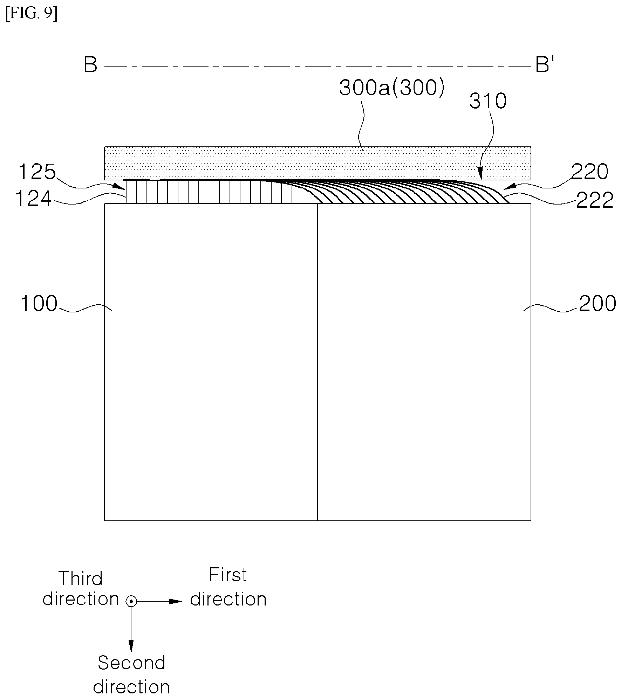

The connection structure of the current collection plate 300 with the electrode tabs 120 and 220 will be described below with reference to FIGS. 8 and 9.

In some embodiments, a length L of each of the plurality of 1-1 uncoated parts in the first direction may be less than or equal to 0.5 times a width W of the current collection plate 300, and a length L of each of the plurality of 2-1 uncoated parts in the first direction may be less than or equal to 0.5 times the width W of the current collection plate 300. Within the above range, the electrode tabs 120 and 220 do not protrude beyond the electrode assemblies 100 and 200, so that an additional bending process may be omitted and the volume of the secondary battery may be reduced.

According to an embodiment, the length L of each of the plurality of 1-1 uncoated parts and the plurality of 2-1 uncoated parts in the first direction may be 0.01 to 0.5 times the width W of the current collection plate 300. Accordingly, the current collection plate 300 and the electrode tabs 120 and 220 may be stably connected.

In some embodiments, the length of each of the first electrode tab 120 and the first auxiliary electrode tab 125 in the third direction may be less than or equal to 0.5 times, or 0.1 times to 0.4 times the length of the first electrode assembly 100 in the third direction. Within the above range, the output properties of the secondary battery may be enhanced while improving space utilization.

In some embodiments, the length of each of the second electrode tab 220 and the second auxiliary electrode tab 225 in the third direction may be less than or equal to 0.5 times, or 0.1 times to 0.4 times the length of the second electrode assembly 200 in the third direction. Within the above range, the output properties of the secondary battery may be enhanced while improving space utilization.

In some embodiments, a shortest distance D between the first electrode tab 120 and the second electrode tab 220 may be less than or equal to the length of the first electrode tab 120 in the third direction. Within the above range, heat generation and damage due to contact between the electrode tabs 120 and 220 may be suppressed, and the space utilization of the secondary battery may be improved.

In some embodiments, the shortest distance D between the first electrode tab 120 and the second electrode tab 220 may be less than or equal to the length of the second electrode tab 220 in the third direction. Within the above range, heat generation and damage due to contact between the electrode tabs 120 and 220 may be suppressed, and the space utilization of the secondary battery may be improved.

In some embodiments, a ratio of the length of the first electrode tab 120 in the first direction to the length of the second electrode tab 220 in the first direction may be 0.5 to 1.5, or 0.8 to 1.2. Within the above range, overcurrent in a specific portion of the secondary battery may be prevented, and the cycle life properties and operational stability may be improved.

In one embodiment, the length of the first electrode tab 120 in the first direction may be substantially equal to the length of the second electrode tab 220 in the first direction.

In some embodiments, the lengths of the first auxiliary electrode tab 125 and the second auxiliary electrode tab 225 may each be 0.5 mm to 3 mm. Within the above range, the second electrode tab 220 and the first electrode tab 120 may be sufficiently supported, while the space utilization of the secondary battery may be further improved.

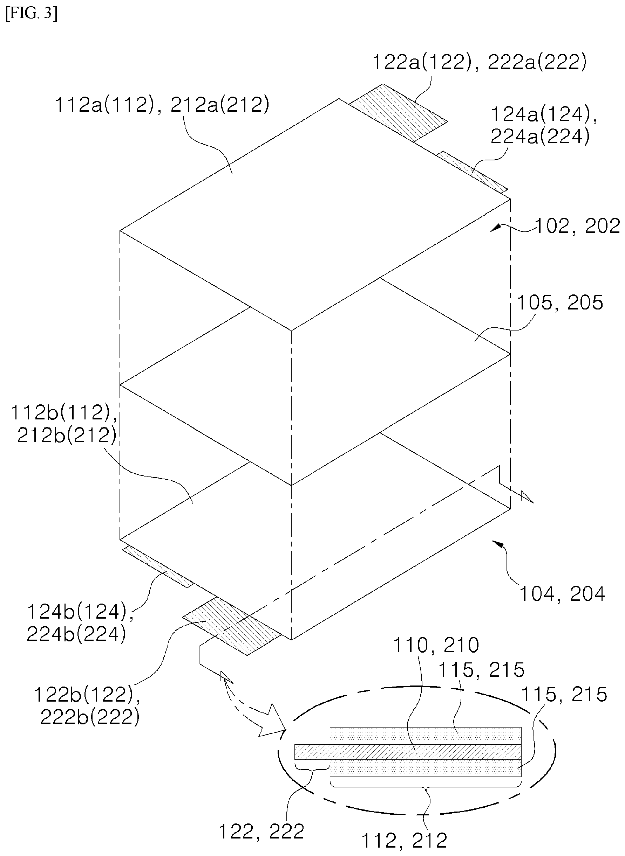

FIG. 3 is a schematic exploded perspective view of an electrode assembly according to exemplary embodiments. For example, FIG. 3 may illustrate an electrode stacking structure included in the first electrode assembly 100 and/or the second electrode assembly 200. For example, each of the first electrode assembly 100 and the second electrode assembly 200 may include a jelly roll structure in which a plurality of the electrode stacking structures are repeatedly stacked. For example, the electrode assemblies 100 and 200 may be formed by winding, stacking, z-folding, or stack-folding the separators 105 and 205.

Referring to FIG. 3, the electrode stacking structure of the first electrode assembly 100 may include a first cathode 102, a first anode 104, and a first separator 105 interposed between the first cathode 102 and the first anode 104.

According to exemplary embodiments, the first cathode 102 and the first anode 104 may be alternately and repeatedly stacked with the first separator 105 interposed therebetween to define the first electrode assembly 100.

The first cathode 102 and the first anode 104 may each include a first coated part 112, the 1-1 uncoated part 122, and the 1-2 uncoated part 124.

The first coated part 112 may include a first current collector 110 and a first active material layer 115 disposed on at least one surface of the first current collector 110. The 1-1 uncoated part 122 and the 1-2 uncoated part 124 may represent regions on the first current collector 110 where the first active material layer 115 is not disposed. The 1-1 uncoated part 122 and the 1-2 uncoated part 124 may extend from the first current collector 110 of the first coated part 112 and protrude from the first coated part 112. The 1-1 uncoated part 122 and the 1-2 uncoated part 124 may be spaced apart from each other in the third direction.

In one embodiment, the first active material layer 115 may be disposed on both surfaces of the first current collector 110.

In some embodiments, a first cathode coated part 112a and a first anode coated part 112b may overlap each other in the direction in which the electrodes are stacked. For example, the first separator 105 may be interposed between the first cathode coated part 112a and the first anode coated part 112b.

According to exemplary embodiments, a 1-1 cathode uncoated part 122a and a 1-1 anode uncoated part 122b may protrude in opposite directions. A 1-2 cathode uncoated part 124a and a 1-2 anode uncoated part 124b may protrude in opposite directions. For example, the 1-1 cathode uncoated part 122a and the 1-2 cathode uncoated part 124a may protrude in one direction from the first cathode coated part 112a, and the 1-1 anode uncoated part 122b and the 1-2 anode uncoated part 124b may protrude in the direction opposite to the one direction from the first anode coated part 112b.

The electrode stacking structure of the second electrode assembly 200 may include a second cathode 202, a second anode 204, and a second separator 205 interposed between the second cathode 202 and the second anode 204.

According to exemplary embodiments, the second cathode 202 and the second anode 204 may be alternately and repeatedly stacked with the second separator 205 interposed therebetween, thereby defining the second electrode assembly 200.

The second cathode 202 and the second anode 204 may each include a second coated part 212, the 2-1 uncoated part 222, and the 2-2 uncoated part 224.

The second coated part 212 may include a second current collector 210 and a second active material layer 215 disposed on at least one surface of the second current collector 210. The 2-1 uncoated part 222 and the 2-2 uncoated part 224 may represent regions on the second current collector 210 where the second active material layer 215 is not disposed. The 2-1 uncoated part 222 and the 2-2 uncoated part 224 may extend from the second current collector 210 of the second coated part 212 and protrude from the second coated part 212. The 2-1 uncoated part 222 and the 2-2 uncoated part 224 may be spaced apart from each other in the third direction.

In one embodiment, the second active material layer 215 may be disposed on both surfaces of the second current collector 210.

In some embodiments, a second cathode coated part 212a and a second anode coated part 212b may overlap each other in the direction in which the electrodes are stacked. For example, the second separator 205 may be interposed between the second cathode coated part 212a and the second anode coated part 212b.

According to exemplary embodiments, a 2-1 cathode uncoated part 222a and a 2-1 anode uncoated part 222b may protrude in opposite directions. A 2-2 cathode uncoated part 224a and a 2-2 anode uncoated part 224b may protrude in opposite directions. For example, the 2-1 cathode uncoated part 222a and the 2-2 cathode uncoated part 224a may protrude in one direction from the second cathode coated part 212a, and the 2-1 anode uncoated part 222b and the 2-2 anode uncoated part 224b may protrude in the direction opposite to the one direction from the second anode coated part 212b.

In exemplary embodiments, the cathodes 102 and 202 may each include a cathode current collector and a cathode active material layer disposed on at least one surface of the cathode current collector.

For example, the cathode current collector may include stainless steel, nickel, aluminum, titanium, or an alloy thereof. The cathode current collector may also include aluminum or stainless steel having a surface treated with carbon, nickel, titanium, or silver. For example, the cathode current collector may have a thickness of 10 µm to 50 µm.

The cathode active material layer may include a cathode active material. For example, the cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.9≤x≤1.2, 0.5≤a≤0.99, 0.01≤b≤0.5, and -0.5≤z≤0.1. As described above, M may include Co, Mn and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may serve as an auxiliary active element which contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the auxiliary elements described above. In Formula 1-1, x, a, b1, b2 and z may satisfy 0.9≤x≤1.2, 0.6≤a≤0.99, 0.01≤b1+b2≤0.4, and -0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to become incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention properties may be improved through Mn while maintaining electrical conductivity.

The content of Ni (e.g., the molar fraction of nickel based on the total moles of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, an Li-rich layered oxide (LLO)/over lithiated oxide (OLO)-based active material, an Mn-rich-based active material, or a Co-less active material, each having a chemical structure or crystal structure represented by Formula 2. These may be used alone or in combination of two or more thereof.

[Formula 2] p[Li₂MnO₃]·(1-p)[Li_{q}JO₂]

In Formula 2, p and q may satisfy 0<p<1, 0.9≤q≤1.2, and J may include at least one element among Mn, Ni, Co, Fe, Cr, V, Cu, Zn, Ti, Al, Mg, and B.

In exemplary embodiments, the anodes 104 and 204 may each include an anode current collector and an anode active material layer disposed on at least one surface of the anode current collector.

For example, the anode current collector may include a copper foil, a nickel foil, a stainless steel foil, a titanium foil, a nickel foam, a copper foam, a polymer substrate coated with a conductive metal and the like. These may be used alone or in combination of two or more thereof. For example, the anode current collector may have a thickness of 10 µm to 50 µm.

The anode active material layer may include an anode active material.

For example, the anode active material may include a material capable of intercalating and deintercalating lithium ions. For example, as the anode active material, carbon-based materials such as crystalline carbon, amorphous carbon, carbon composites, or carbon fibers; lithium metal; a lithium alloy; a silicon (Si)-containing material or a tin (Sn)-containing material may be used. These may be used alone or in combination of two or more thereof.

The amorphous carbon may include hard carbon, soft carbon, coke, mesocarbon microbead (MCMB), mesophase pitch-based carbon fiber (MPCF) or the like.

The crystalline carbon may include graphite-based carbon such as natural graphite, artificial graphite, graphitized coke, graphitized MCMB, graphitized MPCF or the like.

The lithium metal may include pure lithium metal and/or lithium metal having a protective layer formed thereon for suppressing dendrite growth and the like. In one embodiment, a lithium metal-containing layer deposited or coated on the anode current collector may be used as the anode active material layer. In one embodiment, a lithium thin film layer may also be used as the anode active material layer.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity properties. The silicon-containing material may include Si, SiOx (0<x<2), a metal-doped SiOx (0<x<2), a silicon-carbon composite, etc.

The metal may include lithium and/or magnesium, and the metal-doped SiOx (0<x<2) may include a metal silicate.

In some embodiments, the electrode composition may further include a conductive material.

For example, the conductive material may be added to enhance conductivity of the electrode and/or mobility of lithium ions or electrons. For example, the conductive material may include carbon-based conductive materials such as conductive carbon, graphite, carbon black, acetylene black, Ketjen black, graphene, carbon nanotubes (CNTs), vapor-grown carbon fibers (VGCFs), carbon fibers, and/or metal-based conductive materials including perovskite materials, such as tin, tin oxide, titanium oxide, LaSrCoO₃, and LaSrMnO₃. These may be used alone or in combination of two or more thereof.

In some embodiments, the separators 105 and 205 may be configured to prevent an electrical short-circuit between the cathodes 102 and 202 and the anodes 104 and 204, and to allow the flow of ions. For example, the separator may have a thickness of 10 µm to 20 µm.

For example, the separators 105 and 205 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers, etc.

The separators 105 and 205 may also include a ceramic-based material. For example, inorganic particles may be coated on the polymer film or dispersed within the polymer film to improve heat resistance.

The separators 105 and 205 may have a single-layer or multi-layer structure including the above-described polymer film and/or non-woven fabric.

The secondary battery may include a case 500 that accommodates the first electrode assembly 100 and the second electrode assembly. The case 500 may be provided as at least a portion of an outer surface of the secondary battery. In one embodiment, the case 500 may include a metal. Accordingly, an impact on the first electrode assembly 100 and the second electrode assembly 200 may be alleviated.

The case 500 may include a receiving part 510 that accommodates the first electrode assembly 100 and the second electrode assembly 200 therein. For example, an opening may be formed on an upper surface of the case 500 so that the case 500 may be opened in the third direction. The first electrode assembly 100 and the second electrode assembly 200 may be received within the receiving part 510 through the opening.

In some embodiments, the secondary battery may include a cap plate 400 that seals the case 500. The cap plate 400 may be assembled to the case 500. For example, the cap plate 400 and the opening of the case 500 may be assembled so that the receiving part 510 is sealed.

For example, the cap plate 400 may include a cover 410. The cover 410 may have a plate shape. The cap plate 400 may be coupled, fixed or connected to the case 500 through the cover 410.

For example, the cap plate 400 may include an injection hole 440. The injection hole 440 may be a hole or an opening formed in the cover 410. An electrolyte may be injected into the interior of the case 500 through the injection hole 440.

For example, the cap plate 400 may include a vent hole 430. The vent hole 430 may be formed to penetrate the cover 410. Through the vent hole 430, a space inside the case 500 may be connected to the outside in a limited manner.

For example, a vent plate may be coupled to the vent hole 430. The vent plate may rupture when the internal pressure of the case 500 becomes higher than a predetermined pressure. Accordingly, gas or the like inside the case 500 may be discharged to the outside of the case 500, and the internal pressure of the case 500 may decrease.

For example, the secondary battery may include an electrode terminal 420 that is coupled to the cap plate 400 and electrically connected to electrode tabs 120, 130, 220 and 230. The electrode terminal 420 may be mounted on the cover 410. For example, the cover 410 may include an opening in which the electrode terminal 420 may be coupled. The opening may penetrate the cover 410. Through the opening, the electrode terminal 420 may be electrically connected to the first electrode assembly 100 and the second electrode assembly 200.

The electrode terminal 420 may include a cathode terminal 420a and an anode terminal 420b. The cathode terminal 420a may be electrically connected to the cathode tabs. The anode terminal 420b may be electrically connected to the anode tabs.

The electrode assemblies 100 and 200 may be accommodated in the case 500 together with the electrolyte to define a lithium secondary battery. According to exemplary embodiments, a non-aqueous electrolyte may be used as the electrolyte. For example, the non-aqueous electrolyte may be injected into the case 500 through the injection hole 440 of the cap plate 400.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

The organic solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, propylene sulfite and the like. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathodes 102 and 202 and the anodes 104 and 204 in place of the above-described separators 105 and 205.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇₋xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

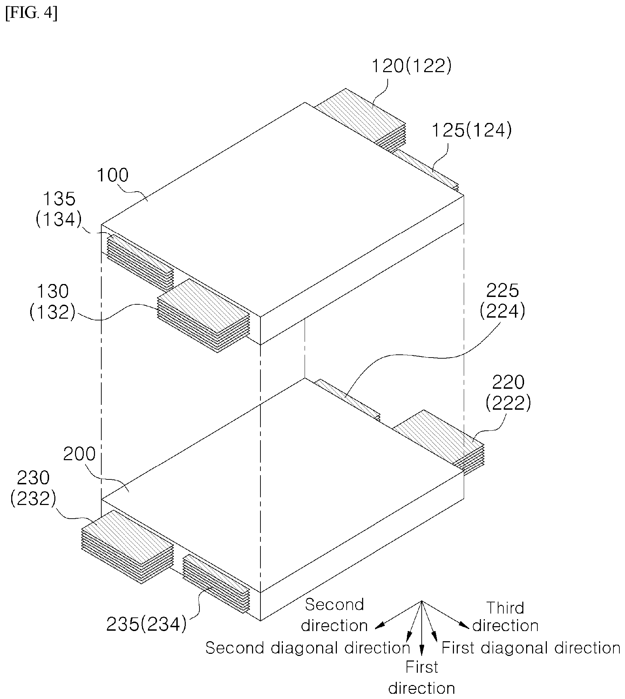

FIG. 4 is a schematic exploded perspective view of a secondary battery according to exemplary embodiments. In FIG. 4, for convenience of description, the electrode tabs 120, 130, 220 and 230 are illustrated in an unbent form. However, as described above, it should be interpreted that the electrode tabs 120, 130, 220 and 230 are actually disposed in a bent form in the secondary battery.

Referring to FIG. 4, the first electrode assembly 100 may include the first electrode tab 120 and the first auxiliary electrode tab 125 protruding from one side of the first electrode assembly 100, and a third electrode tab 130 and a third auxiliary electrode tab 135 protruding from the other side of the first electrode assembly 100.

The third electrode tab 130 may include a plurality of 3-1 uncoated parts 132 protruding from the other side of the first electrode assembly 100 and each bent in the first direction.

The third auxiliary electrode tab 135 may include a plurality of 3-2 uncoated parts 134 that protrude from the same side as the third electrode tab 130 and remain unbent.

The second electrode assembly 200 may include the second electrode tab 220 and the second auxiliary electrode tab 225 protruding from one side of the second electrode assembly 200, and a fourth electrode tab 230 and a fourth auxiliary electrode tab 235 protruding from the other side of the second electrode assembly 200.

The fourth electrode tab 230 may include a plurality of 4-1 uncoated parts 232 that protrude from the other side of the second electrode assembly 200 and are each bent in the direction opposite to the first direction.

The fourth auxiliary electrode tab 235 may include a plurality of 4-2 uncoated parts 234 that protrude from the same side as the fourth electrode tab 230 and remain unbent.

The first electrode assembly 100 and the second electrode assembly 200 may be stacked such that the one side of the first electrode assembly 100 and the one side of the second electrode assembly 200 are in contact with each other, and the other side of the first electrode assembly 100 and the other side of the second electrode assembly 200 are in contact with each other.

In some embodiments, the first electrode tab 120 and the third electrode tab 130 may not be disposed on the same line in the second direction perpendicular to the first direction. The second electrode tab 220 and the fourth electrode tab 230 may also not be disposed on the same line in the second direction.

As shown in FIG. 4, the first electrode tab 120 and the third auxiliary electrode tab 135 may be disposed on the same line in the second direction. The third electrode tab 130 and the first auxiliary electrode tab 125 may also be disposed on the same line in the second direction. The second electrode tab 220 and the fourth auxiliary electrode tab 235 may also be disposed on the same line in the second direction. The fourth electrode tab 230 and the second auxiliary electrode tab 225 may also be disposed on the same line in the second direction.

In some embodiments, the third electrode tab 130 and the fourth electrode tab 230 may face each other in the second diagonal direction inclined in a direction opposite to the first diagonal direction with respect to the first direction. Accordingly, heat generation and damage in the secondary battery due to contact between the third electrode tab 130 and the fourth electrode tab 230 may be prevented, and the processability and reliability may be improved.

For example, the second diagonal direction may be a direction from a central portion of a 3-1 uncoated part, which is positioned farthest from the second electrode assembly 200 among the 3-1 uncoated parts 132, to a central portion of a 4-1 uncoated part 232, which is positioned farthest from the first electrode assembly 100 among the 4-1 uncoated parts 232. The central portion of the 3-1 uncoated part may represent a center point when the 3-1 uncoated part is in an unbent state, and the central portion of the 4-1 uncoated part may represent a center point when the 4-1 uncoated part is in an unbent state.

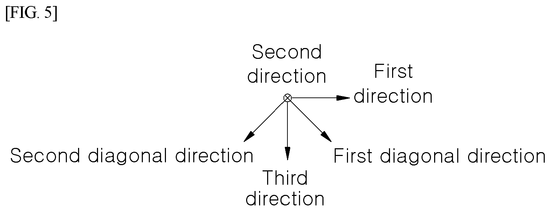

FIG. 5 is a reference view for describing the second diagonal direction.

Referring to FIG. 5, the second diagonal direction may indicate a direction symmetrical to the first diagonal direction with respect to the third direction on a plane formed by the first direction and the third direction.

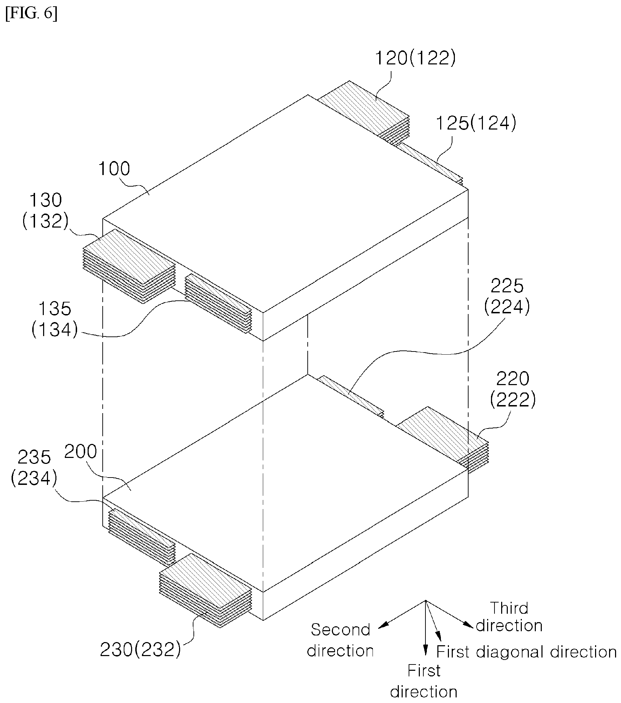

FIG. 6 is a schematic perspective view for describing the first electrode assembly and the second electrode assembly according to exemplary embodiments. In FIG. 6, for convenience of description, the electrode tabs 120, 130, 220 and 230 are illustrated in an unbent form. However, as described above, it should be interpreted that the electrode tabs 120, 130, 220 and 230 are actually disposed in a bent form in the secondary battery.

As shown in FIG. 6, the first electrode tab 120 and the third electrode tab 130 of the first electrode assembly 100 may be disposed on the same line in the second direction. The first auxiliary electrode tab 125 and the third auxiliary electrode tab 135 may also be disposed on the same line in the second direction. The second electrode tab 220 and the fourth electrode tab 230 of the second electrode assembly 200 may also be disposed on the same line in the second direction. The second auxiliary electrode tab 225 and the fourth auxiliary electrode tab 235 may also be disposed on the same line in the second direction.

In some embodiments, the second electrode tab 220 and the fourth electrode tab 230 may face each other in the first diagonal direction. Accordingly, heat generation and damage in the secondary battery due to contact between the second electrode tab 220 and the fourth electrode tab 230 may be prevented, and the processability and reliability may be improved.

In some embodiments, the length of each of the plurality of 3-1 uncoated parts and the plurality of 4-1 uncoated parts in the first direction may be less than or equal to 0.5 times the width of the current collection plate, and in one embodiment, may be 0.01 to 0.5 times. Accordingly, the current collection plate 300 and the electrode tabs 130 and 230 may be stably connected.

In some embodiments, the first electrode tab 120, the first auxiliary electrode tab 125, the second electrode tab 220 and the second auxiliary electrode tab 225 may be provided as cathode tabs, and the third electrode tab 130, the third auxiliary electrode tab 135, the fourth electrode tab 230 and the fourth auxiliary electrode tab 235 may be provided as anode tabs.

For example, the 1-1 cathode uncoated parts (122a) of the first electrode assembly 100 may be provided as the 1-1 uncoated parts 122, and an aggregate of the 1-1 uncoated parts 122 may be provided as the first electrode tab 120.

For example, the 1-2 cathode uncoated parts (124a) of the first electrode assembly 100 may be provided as the 1-2 uncoated parts 124, and an aggregate of the 1-2 uncoated parts 124 may be provided as the first auxiliary electrode tab 125.

For example, the 1-1 anode uncoated parts (122b) of the first electrode assembly 100 may be provided as the 3-1 uncoated parts 132, and an aggregate of the 3-1 uncoated parts 132 may be provided as the third electrode tab 130.

For example, the 1-2 anode uncoated parts (124b) of the first electrode assembly 100 may be provided as the 3-2 uncoated parts 134, and an aggregate of the 3-2 uncoated parts 134 may be provided as the third auxiliary electrode tab 135.

For example, the 2-1 cathode uncoated parts 222a of the second electrode assembly 200 may be provided as the 2-1 uncoated parts 222, and an aggregate of the 2-1 uncoated parts 222 may be provided as the second electrode tab 220.

For example, the 2-2 cathode uncoated parts 224a of the second electrode assembly 200 may be provided as the 2-2 uncoated parts 224, and an aggregate of the 2-2 uncoated parts 224 may be provided as the second auxiliary electrode tab 225.

For example, the 2-1 anode uncoated parts 222b of the second electrode assembly 200 may be provided as the 4-1 uncoated parts 232, and an aggregate of the 4-1 uncoated parts 232 may be provided as the fourth electrode tab 230.

For example, the 2-2 anode uncoated parts 224b of the second electrode assembly 200 may be provided as the 4-2 uncoated parts 234, and an aggregate of the 4-2 uncoated parts 234 may be provided as the fourth auxiliary electrode tab 235.

In one embodiment, the first electrode tab 120 and the first auxiliary electrode tab 125 may be provided as the cathode tabs of the first electrode assembly 100. The third electrode tab 130 and the third auxiliary electrode tab 135 may be provided as the anode tabs of the first electrode assembly 100.

In one embodiment, the second electrode tab 220 and the second auxiliary electrode tab 225 may be provided as the cathode tabs of the second electrode assembly 200. The fourth electrode tab 230 and the fourth auxiliary electrode tab 235 may be provided as the anode tabs of the second electrode assembly 200.

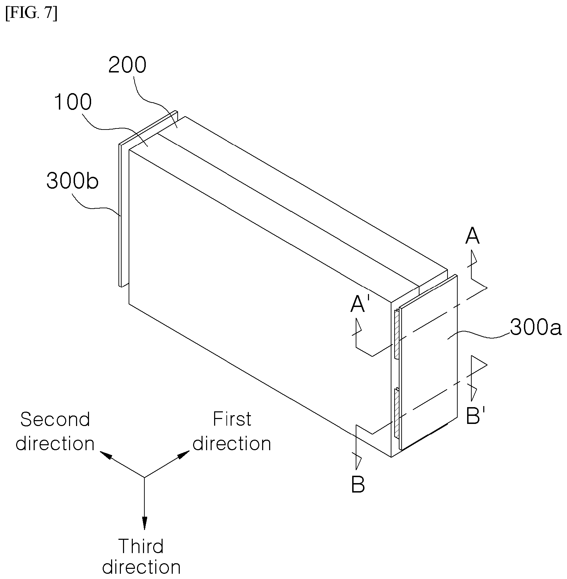

FIG. 7 is a schematic perspective view illustrating an electrode assembly and a current collection plate according to exemplary embodiments. In FIG. 7, the cap plate 400 and the case 500 are omitted for convenience of illustration.

Referring to FIG. 7, the current collection plate 300 may be disposed on opposite sides of the stacked structure of the first and second electrode assemblies 100 and 200.

In some embodiments, the current collection plate 300 may include a first current collection plate 300a disposed on one side of the stacked structure and electrically connected to the first electrode tab 120 and the second electrode tab 220, and a second current collection plate 300b disposed on the other side of the stacked structure and electrically connected to the third electrode tab 130 and the fourth electrode tab 230.

For example, the first current collection plate 300a may be provided as a cathode current collection plate. In this case, the first current collection plate 300a may be electrically connected to the cathode terminal 420a.

For example, the second current collection plate 300b may be provided as an anode current collection plate. In this case, the second current collection plate 300b may be electrically connected to the anode terminal 420b.

FIG. 8 is a schematic cross-sectional view observed from the third direction along the line A-A' of FIG. 7. FIG. 9 is a schematic cross-sectional view observed from the third direction along the line B-B' of FIG. 7.

As shown in FIG. 8, the 1-1 uncoated parts 122 may protrude from the one side of the first electrode assembly 100 and may be bent in the first direction. The 2-2 uncoated parts 224 may protrude from the one side of the second electrode assembly 200 and may be in contact with the bent 1-1 uncoated parts 122 or may support the 1-1 uncoated parts 122.

As shown in FIG. 9, the 2-1 uncoated parts 222 may protrude from one side of the second electrode assembly 200 and may be bent in the direction opposite to the first direction. The 1-2 uncoated parts 124 may protrude from one side of the first electrode assembly 100 and may be in contact with the bent 2-1 uncoated parts 222 or may support the 2-1 uncoated parts 222.

In some embodiments, the current collection plate 300 may be connected to the upper surface of the bent 1-1 uncoated parts 122 and the upper surface of the 2-1 uncoated parts 222. For example, the upper surface of the 1-1 uncoated parts 122 and the current collection plate 300 may contact each other, and the upper surface of the 2-1 uncoated parts 222 and the current collection plate 300 may also contact each other.

According to an embodiment, by placing and pressing the current collection plate 300 on the 1-1 uncoated parts 122 and the 2-1 uncoated parts 222, the connection stability and space utilization of the current collection plate 300 and the stacked structure may be improved.

In some embodiments, the current collection plate 300 may include welded parts 310 in which the first electrode tab 120 including the 1-1 uncoated parts 122 and the second electrode tab 220 including the 2-1 uncoated parts 222 are welded, respectively.

For example, the first electrode tab 120 and the second electrode tab 220 may each be in contact with the first current collection plate 300a and be welded by laser welding. Accordingly, a welded part in which the upper surfaces of the first and second electrode tabs 120 and 220 are welded to the first current collection plate 300a may be formed.

For example, the third electrode tab 130 and the fourth electrode tab 230 may each be in contact with the second current collection plate 300b and may be welded by laser welding. Accordingly, a welded part in which the upper surfaces of the third and fourth electrode tabs 130 and 230 are welded to the second current collection plate 300b may be formed.

The laser welding may include types of welding commonly used in the art.

For example, the laser welding may include fillet welding or lap joint welding.

In some embodiments, the welded parts 310 may be disposed on a surface of the current collection plate 300 that is adjacent to the first electrode assembly 100 and the second electrode assembly 200. Accordingly, the electrode tabs 120, 130, 220 and 230 may be entirely covered by the current collection plate 300, thereby improving the processability, operational reliability, and mechanical stability of the secondary battery.

The shape of the case 500 shown in FIG. 1 is merely illustrative, and the shape and size of the first electrode assembly 100 and the second electrode assembly 200, as well as the structure of the module or pack to which the secondary battery is applied, may vary.

The invention relates also to the following numbered aspects:
Aspect 1. A secondary battery comprising: a first electrode assembly (100) comprising a first electrode tab (120) including a plurality of 1-1 uncoated parts (122), each bent in a first direction, and a first auxiliary electrode tab (125) protruding from the same side as the first electrode tab (120); a second electrode assembly (200) stacked on the first electrode assembly (100) in the first direction and comprising a second electrode tab (220) including a plurality of 2-1 uncoated parts (222), each bent in a direction opposite to the first direction, and a second auxiliary electrode tab (225) protruding from the same side as the second electrode tab (220); and a current collection plate (300) that entirely covers the first electrode tab (120) and the second electrode tab (220), and is electrically connected to the first electrode tab (120) and the second electrode tab (220), wherein the first electrode tab (120) is bent in the first direction to contact the second auxiliary electrode tab (225), and the second electrode tab (220) is bent in the direction opposite to the first direction to contact the first auxiliary electrode tab (125).
Aspect 2. The secondary battery according to aspect 1, wherein the first electrode tab (120) and the second electrode tab (220) are not disposed on the same line in the first direction, and the first auxiliary electrode tab (125) and the second auxiliary electrode tab (225) are not disposed on the same line in the first direction, or the first electrode tab (120) and the second auxiliary electrode tab (225) are disposed on the same line in the first direction, and the second electrode tab (220) and the first auxiliary electrode tab (125) are disposed on the same line in the first direction.
Aspect 3. The secondary battery according to aspect 1 or 2, wherein the first electrode tab (120) is supported by an end portion of the second auxiliary electrode tab (225), and the second electrode tab (220) is supported by an end portion of the first auxiliary electrode tab (125).
Aspect 4. The secondary battery according to anyone of aspects 1 to 3, wherein the first auxiliary electrode tab (125) comprises a plurality of unbent 1-2 uncoated parts (124), and the second auxiliary electrode tab (225) comprises a plurality of unbent 2-2 uncoated parts (224).
Aspect 5. The secondary battery according to anyone of aspects 1 to 4, wherein the first electrode tab (120) and the second electrode tab (220) face each other in a first diagonal direction inclined relative to the first direction.
Aspect 6. The secondary battery according to anyone of aspects 1 to 5, wherein a length of each of the plurality of 1-1 uncoated parts (122) and the plurality of 2-1 uncoated parts (222) in the first direction is less than or equal to 0.5 times a width of the current collection plate (300).
Aspect 7. The secondary battery according to anyone of aspects 1 to 6, wherein a ratio of the length of the second electrode tab (220) in the first direction to the length of the first electrode tab (120) in the first direction is 0.5 to 1.5.
Aspect 8. The secondary battery according to anyone of aspects 1 to 7, wherein the number of the plurality of 1-1 uncoated parts (122) included in the first electrode tab (120) is 5 to 100, and the number of the plurality of 2-1 uncoated parts (222) included in the second electrode tab (220) is 5 to 100.
Aspect 9. The secondary battery according to anyone of aspects 1 to 8, wherein a width direction of the first electrode assembly (100) and the second electrode assembly (200) is the first direction, a longitudinal direction of the first electrode assembly (100) and the second electrode assembly (200) is a second direction, a height direction of the first electrode assembly (100) and the second electrode assembly (200) is a third direction, and the first electrode tab (120) and the first auxiliary electrode tab (125) are spaced apart from each other in the third direction, and the second electrode tab (220) and the second auxiliary electrode tab (225) are spaced apart from each other in the third direction.
Aspect 10. The secondary battery according to anyone of aspects 1 to 9, wherein a width direction of the first electrode assembly (100) and the second electrode assembly (200) is the first direction, a longitudinal direction of the first electrode assembly (100) and the second electrode assembly (200) is the second direction, and a height direction of the first electrode assembly (100) and the second electrode assembly (200) is the third direction, and the shortest distance between the first electrode tab (120) and the second electrode tab (220) is less than or equal to a length of the first electrode tab (120) in the third direction, and the shortest distance is less than or equal to a length of the second electrode tab (220) in the third direction.
Aspect 11. The secondary battery according to anyone of aspects 1 to 10, wherein the first electrode tab (120) protrudes from one side of the first electrode assembly (100), and the second electrode tab (220) protrudes from one side of the second electrode assembly (200), the first electrode assembly (100) further comprises a third electrode tab (130) protruding from the other side of the first electrode assembly (100) and comprising a plurality of 3-1 uncoated parts (132), each bent in the first direction, and the second electrode assembly (200) further comprises a fourth electrode tab (230) protruding from the other side of the second electrode assembly (200) and comprising a plurality of 4-1 uncoated parts (232), each bent in the direction opposite to the first direction, and optionally the first electrode assembly (100) further comprises a third auxiliary electrode tab (135) protruding from the same side as the third electrode tab (130) and comprising a plurality of 3-2 uncoated parts (134), and the second electrode assembly (200) further comprises a fourth auxiliary electrode tab (235) protruding from the same side as the fourth electrode tab (230) and comprising a plurality of 4-2 uncoated parts (234).
Aspect 12. The secondary battery according to aspect 11, wherein the first electrode tab (120) and the third auxiliary electrode tab (135) are disposed on the same line in a second direction perpendicular to the first direction, the third electrode tab (130) and the first auxiliary electrode tab (125) are disposed on the same line in the second direction, the second electrode tab (220) and the fourth auxiliary electrode tab (235) are disposed on the same line in the second direction, and the fourth electrode tab (230) and the second auxiliary electrode tab (225) are disposed on the same line in the second direction and optionally the first electrode tab (120) and the second electrode tab (220) face each other in a first diagonal direction inclined relative to the first direction, and the third electrode tab (130) and the fourth electrode tab (230) face each other in a second diagonal direction inclined in a direction opposite to the first diagonal direction with respect to the first direction.
Aspect 13. The secondary battery according to aspect 11, wherein the first electrode tab (120) and the third electrode tab (130) are disposed on the same line in a second direction perpendicular to the first direction, the first auxiliary electrode tab (125) and the third auxiliary electrode tab (135) are disposed on the same line in the second direction, the second electrode tab (220) and the fourth electrode tab (230) are disposed on the same line in the second direction, and the second auxiliary electrode tab (225) and the fourth auxiliary electrode tab (235) are disposed on the same line in the second direction.
Aspect 14. The secondary battery according to anyone of aspects 1 to 13, wherein the current collection plate (300) comprises welded parts (310) formed by welding the first electrode tab (120) and the second electrode tab (220) to the current collection plate (300), respectively, and optionally the welded parts (310) are disposed on a surface of the current collection plate (300) that is adjacent to the first electrode assembly (100) and the second electrode assembly (200).
Aspect 15. The secondary battery according to anyone of aspects 1 to 14, further comprising: a case (500) in which the first electrode assembly (100) and the second electrode assembly (200) are accommodated; a cap plate (400) configured to seal the case (500); and an electrode terminal (420) coupled to the cap plate (400) and electrically connected to the first electrode tab (120) and the second electrode tab (220), and optionally connected to the third electrode tab (130) and the fourth electrode tab (230).

### [Description of Reference Numerals]

100: First electrode assembly
102: First cathode
104: First anode
105: First separator
110: First current collector
112: First coated part
115: First active material layer
120: First electrode tab
122: 1-1 uncoated parts
200: Second electrode assembly
202: Second cathode
204: Second anode
205: Second separator
210: Second current collector
215: Second active material layer
220: Second electrode tab
222: 2-1 uncoated parts
300: Current collection plate
310: Welded part
400: Cap plate
410: Cover
420: Electrode terminal
430: Vent hole
440: Injection hole
500: Case
510: Receiving part

## Claims

1. A secondary battery comprising:
a first electrode assembly (100) comprising a first electrode tab (120) including a plurality of 1-1 uncoated parts (122), each bent in a first direction, and a first auxiliary electrode tab (125) protruding from the same side as the first electrode tab (120);
a second electrode assembly (200) stacked on the first electrode assembly (100) in the first direction and comprising a second electrode tab (220) including a plurality of 2-1 uncoated parts (222), each bent in a direction opposite to the first direction, and a second auxiliary electrode tab (225) protruding from the same side as the second electrode tab (220); and
a current collection plate (300) that entirely covers the first electrode tab (120) and the second electrode tab (220), and is electrically connected to the first electrode tab (120) and the second electrode tab (220),
wherein the first electrode tab (120) is bent in the first direction to contact the second auxiliary electrode tab (225), and the second electrode tab (220) is bent in the direction opposite to the first direction to contact the first auxiliary electrode tab (125).

2. The secondary battery according to claim 1, wherein the first electrode tab (120) and the second electrode tab (220) are not disposed on the same line in the first direction, and the first auxiliary electrode tab (125) and the second auxiliary electrode tab (225) are not disposed on the same line in the first direction, or
the first electrode tab (120) and the second auxiliary electrode tab (225) are disposed on the same line in the first direction, and the second electrode tab (220) and the first auxiliary electrode tab (125) are disposed on the same line in the first direction.

3. The secondary battery according to claim 1 or 2, wherein the first electrode tab (120) is supported by an end portion of the second auxiliary electrode tab (225), and the second electrode tab (220) is supported by an end portion of the first auxiliary electrode tab (125).

4. The secondary battery according to anyone of claims 1 to 3, wherein the first auxiliary electrode tab (125) comprises a plurality of unbent 1-2 uncoated parts (124), and the second auxiliary electrode tab (225) comprises a plurality of unbent 2-2 uncoated parts (224).

5. The secondary battery according to anyone of claims 1 to 4, wherein the first electrode tab (120) and the second electrode tab (220) face each other in a first diagonal direction inclined relative to the first direction.

6. The secondary battery according to anyone of claims 1 to 5, wherein a length of each of the plurality of 1-1 uncoated parts (122) and the plurality of 2-1 uncoated parts (222) in the first direction is less than or equal to 0.5 times a width of the current collection plate (300).

7. The secondary battery according to anyone of claims 1 to 6, wherein a ratio of the length of the second electrode tab (220) in the first direction to the length of the first electrode tab (120) in the first direction is 0.5 to 1.5.

8. The secondary battery according to anyone of claims 1 to 7, wherein the number of the plurality of 1-1 uncoated parts (122) included in the first electrode tab (120) is 5 to 100, and the number of the plurality of 2-1 uncoated parts (222) included in the second electrode tab (220) is 5 to 100.

9. The secondary battery according to anyone of claims 1 to 8, wherein a width direction of the first electrode assembly (100) and the second electrode assembly (200) is the first direction, a longitudinal direction of the first electrode assembly (100) and the second electrode assembly (200) is a second direction, a height direction of the first electrode assembly (100) and the second electrode assembly (200) is a third direction, and
the first electrode tab (120) and the first auxiliary electrode tab (125) are spaced apart from each other in the third direction, and the second electrode tab (220) and the second auxiliary electrode tab (225) are spaced apart from each other in the third direction.

10. The secondary battery according to anyone of claims 1 to 9, wherein a width direction of the first electrode assembly (100) and the second electrode assembly (200) is the first direction, a longitudinal direction of the first electrode assembly (100) and the second electrode assembly (200) is the second direction, and a height direction of the first electrode assembly (100) and the second electrode assembly (200) is the third direction, and
the shortest distance between the first electrode tab (120) and the second electrode tab (220) is less than or equal to a length of the first electrode tab (120) in the third direction, and the shortest distance is less than or equal to a length of the second electrode tab (220) in the third direction.

11. The secondary battery according to anyone of claims 1 to 10, wherein the first electrode tab (120) protrudes from one side of the first electrode assembly (100), and the second electrode tab (220) protrudes from one side of the second electrode assembly (200),
the first electrode assembly (100) further comprises a third electrode tab (130) protruding from the other side of the first electrode assembly (100) and comprising a plurality of 3-1 uncoated parts (132), each bent in the first direction, and
the second electrode assembly (200) further comprises a fourth electrode tab (230) protruding from the other side of the second electrode assembly (200) and comprising a plurality of 4-1 uncoated parts (232), each bent in the direction opposite to the first direction, and optionally the first electrode assembly (100) further comprises a third auxiliary electrode tab (135) protruding from the same side as the third electrode tab (130) and comprising a plurality of 3-2 uncoated parts (134), and
the second electrode assembly (200) further comprises a fourth auxiliary electrode tab (235) protruding from the same side as the fourth electrode tab (230) and comprising a plurality of 4-2 uncoated parts (234).

12. The secondary battery according to claim 11, wherein the first electrode tab (120) and the third auxiliary electrode tab (135) are disposed on the same line in a second direction perpendicular to the first direction,
the third electrode tab (130) and the first auxiliary electrode tab (125) are disposed on the same line in the second direction,
the second electrode tab (220) and the fourth auxiliary electrode tab (235) are disposed on the same line in the second direction, and
the fourth electrode tab (230) and the second auxiliary electrode tab (225) are disposed on the same line in the second direction and optionally
the first electrode tab (120) and the second electrode tab (220) face each other in a first diagonal direction inclined relative to the first direction, and
the third electrode tab (130) and the fourth electrode tab (230) face each other in a second diagonal direction inclined in a direction opposite to the first diagonal direction with respect to the first direction.

13. The secondary battery according to claim 11, wherein the first electrode tab (120) and the third electrode tab (130) are disposed on the same line in a second direction perpendicular to the first direction,
the first auxiliary electrode tab (125) and the third auxiliary electrode tab (135) are disposed on the same line in the second direction,
the second electrode tab (220) and the fourth electrode tab (230) are disposed on the same line in the second direction, and
the second auxiliary electrode tab (225) and the fourth auxiliary electrode tab (235) are disposed on the same line in the second direction.

14. The secondary battery according to anyone of claims 1 to 13, wherein the current collection plate (300) comprises welded parts (310) formed by welding the first electrode tab (120) and the second electrode tab (220) to the current collection plate (300), respectively, and optionally
the welded parts (310) are disposed on a surface of the current collection plate (300) that is adjacent to the first electrode assembly (100) and the second electrode assembly (200).

15. The secondary battery according to anyone of claims 1 to 14, further comprising:
a case (500) in which the first electrode assembly (100) and the second electrode assembly (200) are accommodated;
a cap plate (400) configured to seal the case (500); and
an electrode terminal (420) coupled to the cap plate (400) and electrically connected to the first electrode tab (120) and the second electrode tab (220), and optionally connected to the third electrode tab (130) and the fourth electrode tab (230).
